# EUROPEAN PATENT APPLICATION

(11) **EP 3 888 463 A1**
(43) Date of publication of application: **06.10.2021**
(21) Application number: 20167798.6
(22) Date of filing: 02.04.2020
(51) Int. Cl.: A01N 43/653, A01N 25/02, A01P 3/00

(54) **CRYSTALLIZATION INHIBITORS FOR TRIAZOLE PESTICIDE FORMULATIONS**

(71) Applicant: Rotam Agrochem International Company Limited, Chai Wan (HK)
(72) Inventor: Bristow, James Timothy, Chai Wan (HK)
(74) Representative: Akers, Noel James

(57) **Abstract**

There is provided the use of an N-alkylpyrrolidone to inhibit the crystallization of a fungicidally active triazole in a liquid formulation. Preferably, an N-alkylpyrrolidone of the general formula (I) is employed: 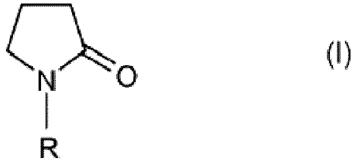 wherein R is an alkyl group, preferably wherein R is a linear alkyl group.
A composition comprising an N-alkylpyrrolidone and fungicidally active triazole is also provided. The use of the N-alkylpyrrolidone reduces the blockage of spray equipment and the formation of triazole residues in the spray equipment.

## Description

The present invention relates to the use of at least one N-alkylpyrrolidone in liquid pesticide formulations, including aqueous spray formulations, containing at least one triazole for inhibiting the crystallization of the triazole.

Triazoles are a class of pesticidally active compounds. In particular, triazoles are known that exhibit significant activity in the treatment and/or prevention of fungal infestations in plants. Fungicidally active triazoles, methods for their preparation and their use in the protection of plants from fungal infestations are known in the art. Fungicidally active triazoles and their formulations are available commercially. Examples of important fungicidally active triazoles include prothioconazole and cyproconazole.

The most common method of applying a triazole to a plant is by spraying the plant with a formulation of the triazole diluted with a carrier, most commonly water. In particular, the triazole is formulated as a solution in a suitable solvent, which is then dispersed in water shortly before being sprayed on the target plants. Spray equipment commonly used in the application of such formulations generally has one or more filters and nozzles through which the spray formulation is caused to pass before being applied to the target plants.

Triazoles have a very low solubility in water or are generally insoluble in water. Any tendency of the triazole to crystallize from its solution in the formulation results in the accumulation of solid triazole, which in turn blocks the filters and nozzles of spray equipment. This leads to a reduction in the efficiency of the spraying operation. In addition, any crystallized triazole is generally retained within the spray equipment and is not applied to the plants being treated. This, in turn, reduces the efficacy of the formulation being applied and requires the formulation to be applied in higher volumes to achieve a desired concentration of the active triazole ingredient at the locus being treated.

Attempts have been made to provide ways to inhibit the crystallization of fungicidally active triazoles. In particular, attempts have been made to identify compounds that are active in reducing or inhibiting the crystallization of fungicidally active triazoles.

US 5,206,225 describes the use of an alkylcarboxylic acid dimethylamide as a crystallization inhibitor for triazole microbicides. In particular, there is disclosed the use of an alkylcarboxylic acid dimethylamide of the formula: 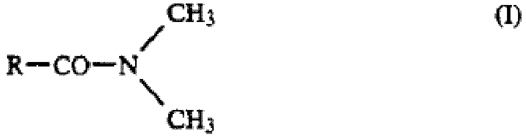 in which R is a C₅ to C₉ alkyl group, to inhibit the crystallization of a range of fungicidally active triazoles.

US 5,369,118 describes the use of an N-alkyllactam as a crystallization inhibitor for certain triazole fungicides. In particular, there is disclosed the use of an N-alkyl-lactam of the formula: 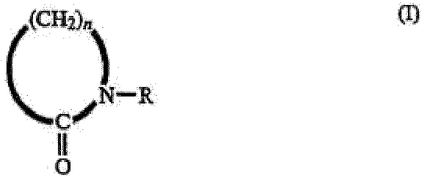 in which R is a C₈ to C₁₈ alkyl group and n is 3, 4 or 5, to inhibit the crystallization of tebuconazole and triadimenol.

There is a continuing need for an improved technique to inhibit or prevent the crystallization of fungicidally active triazoles from liquid formulations, in particular aqueous spray dispersions.

It has now been found that certain N-alkylpyrrolidones are effective in inhibiting the crystallization of fungicidally active triazoles from liquid formulations, in particular aqueous spray formulations.

Accordingly, in a first aspect, the present invention provides the use of an N-alkylpyrrolidone to inhibit the crystallization of a fungicidally active triazole in a liquid formulation.

It has been found that an N-alkylpyrrolidone is effective in reducing or preventing a fungicidal triazole from crystallizing out of a liquid formulation. The present invention may employ a single N-alkylpyrrolidone or two or more N-alkylpyrrolidones.

In a preferred embodiment, an N-alkylpyrrolidone of the general formula (l) is employed: 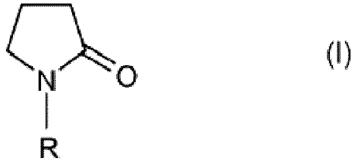 wherein R is an alkyl group.

In N-alkylpyrrolidones of general formula (I), R may be a linear alkyl group or may be a branched alkyl group. It is particularly preferred that R is a linear alkyl group.

In N-alkylpyrrolidones of general formula (I), R may be an alkyl group having any suitable number of carbon atoms, such as from 4 carbon atoms, in particular from at least 5 carbon atoms, more preferably at least 6 carbon atoms. In particularly preferred embodiments, R is an alkyl group having at least 7 carbon atoms, more preferably at least 8 carbon atoms.

In N-alkylpyrrolidones of general formula (I), R may be an alkyl group having up to 20 carbon atoms, more preferably up to 18 carbon atoms. In particularly preferred embodiments, R is an alkyl group having up to 16 carbon atoms, more preferably up to 14 carbon atoms, still more preferably up to 12 carbon atoms.

In N-alkylpyrrolidones of general formula (I), R may be an alkyl group having from 5 to 20 carbon atoms, more preferably from 6 to 18 carbon atoms, still more preferably from 7 to 16 carbon atoms. In particular preferred embodiments, R is an alkyl group having from 8 to 14 carbon atoms, more preferably from 8 to 12 carbon atoms.

Examples of particularly suitable N-alkylpyrrolidones are N-hexyl-pyrrolidone, N-octyl-pyrrolidone, N-decyl-pyrrolidone, N-dodecyl-pyrrolidone, N-tetradecyl-pyrrolidone, N-cetyl-pyrrolidone, N-octadecyl-pyrrolidone, N-eicosyl-pyrrolidone. N-octyl-pyrrolidone is a particularly preferred N-alkylpyrrolidone.

The present invention may employ a single N-alkylpyrrolidone or a mixture of two or more N-alkylpyrrolidones.

Fungicidally active triazoles, such as prothioconazole and cyproconazole, are water-insoluble and tend to crystallize in an aqueous solution. During use, a liquid pesticide formulation containing the triazole fungicide is typically diluted with water to form an aqueous dispersion, which is then sprayed onto the plants, plant parts or locus being treated. The tendency of the triazole fungicides to crystallize results in the spray equipment, such as filters and spray nozzles, being blocked. In addition, any crystallization of the triazole active compound reduces the effective amount of the active ingredient in the formulation being applied. This in turn leads to a greater amount of the formulation being required to perform a given duty. The use of an N-alkyl-pyrrolidone according to the present invention reduces or eliminates these problems, in particular reducing or preventing crystallization of the triazole fungicide and maintaining a homogeneous liquid formulation, thereby preventing spray equipment from becoming blocked. The use according to the present invention also reduces the triazole residue remaining in the spray equipment after use.

The triazole employed in the present invention may be any fungicidally active triazole. Such triazoles are known in the art and are commercially available. Fungicidally active triazoles that may be used in the present invention include azaconazole, bromuconazole, cyproconazole, diclobutrazol, difenoconazole, diniconazole, diniconazole-M, epoxiconazole, etaconazole, enbuconazole, fluquinconazole, flusilazole, flutriafol, furconazole, furconazole-cis, hexaconazole, imibenconazole, ipconazole, ipfentrifluconazole, mefentrifluconazole, metconazole, myclobutanil, penconazole, propiconazole, prothioconazole, quinconazole, simeconazole, tebuconazole, tetraconazole, triadimefon, triadimenol, triticonazole, uniconazole, and uniconazole-P.

The present invention may employ a single triazole fungicide or a mixture of two or more fungicidally active triazoles.

In one embodiment, the triazole does not include difenoconazole, tebuconazole, triadimenol, triazolone, diclobutrazol or imibenconazole.

The present invention is particularly effective when the triazole is prothioconazole or cyproconazole, or a mixture thereof.

The amount of N-alkylpyrrolidone employed depends on the amount of the triazole present in the formulation. In general, sufficient N-alkylpyrrolidone is employed to reduce crystallization of the triazole to the required level. The triazole is preferably employed in the same or greater amount by weight than the N-alkylpyrrolidone. In some embodiments, however, the N-alkylpyrrolidone may be employed in a greater amount by weight than the triazole.

The weight ratio of the triazole to the N-alkylpyrrolidone may range up to about 15:1, preferably up to about 12:1, and more preferably up to about 10:1. The weight ratio of the triazole to the N-alkylpyrrolidone may range up to about 8:1, such as up to 5:1, preferably up to about 3:1, and more preferably up to about 1.5:1.

The weight ratio of the N-alkylpyrrolidone to the triazole may range up to about 15:1, preferably up to about 10:1, and more preferably up to about 8:1. The weight ratio of the N-alkylpyrrolidone to the triazole may range up to about 5:1, such as up to about 3:1, preferably up to about 2:1, and more preferably up to about 1.5:1.

The weight ratio of the triazole to the N-alkylpyrrolidone may range from about 15:1 to about 1:15, preferably from about 12:1 to about 1:10, and more preferably from about 10:1 to about 1:5. The weight ratio of the triazole to the N-alkylpyrrolidone may range from about 5:1 to about 1:3, preferably from about 3:1 to about 1:2, and more preferably from about 1.5:1 to about 1:1. In many embodiments, a weight ratio of triazole and N-alkylpyrrolidone of about 1:1 is very suitable.

In a further aspect, the present invention provides a liquid fungicidal composition, the composition comprising:
(1) at least one fungicidally active triazole;
(2) at least one N-alkylpyrrolidone; and
(3) optionally one or more agriculturally acceptable formulation additive.

The triazole may be present in the liquid composition in any suitable amount. The triazole may be present in an amount of from about 0.5% by weight, preferably from 1% by weight, more preferably from about 2%, still more preferably from about 3%, more preferably still from about 5% by weight. The triazole may be present in an amount of up to 60% by weight, preferably up to 50% by weight, more preferably up to 40% by weight, still more preferably up to 30% by weight. The triazole may be present in the composition in an amount of from 0.5 to 60% by weight, preferably from 1 to 50%, more preferably from 2 to 40% by weight.

The N-alkylpyrrolidone may be present in the liquid composition in any suitable amount. The N-alkylpyrrolidone may be present in an amount of from about 0.5% by weight, preferably from 1% by weight, more preferably from about 2%, still more preferably from about 3%, more preferably still from about 5% by weight. The N-alkylpyrrolidone may be present in an amount of up to 90% by weight, preferably up to 80% by weight, more preferably up to 70% by weight, still more preferably up to 60% by weight. The N-alkylpyrrolidone may be present in the composition in an amount of from 0.5 to 90% by weight, preferably from 1 to 80%, more preferably from 2 to 70% by weight.

In one embodiment, the liquid composition comprises:
(1) about 1 to 40% by weight, preferably about 5 to 30%, of at least one triazole active ingredient;
(2) about 1 to 90% by weight, preferably about 5 to 70%, of at least one N-alkylpyrrolidone as a crystallization inhibitor having the formula (I): 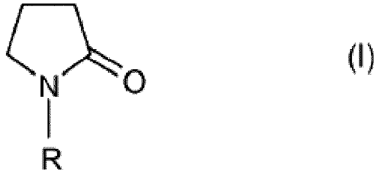 wherein R is an alkyl group as hereinbefore defined, more preferably a linear saturated alkyl group having 6 to 20 carbon atoms, preferably a linear saturated alkyl group having 8 to 16 carbon atoms; and
(3) about 0 to 98% by weight of one or more agrochemical additives.

The N-alkylpyrrolidone and the triazole for use in the liquid composition and their relative amounts are as discussed hereinbefore.

The liquid pesticide formulation of the present invention may optionally include one or more suitable additives, such as organic solvents, anti-foaming agents, emulsifiers, dispersing agents, preservatives, antioxidants, pH adjusters, colorants and water.

Suitable solvents are known in the art and may be selected from vegetable oils; animal oils; aliphatic hydrocarbons; aromatic hydrocarbons, such as toluene, xylene, and tetrahydronaphthalene; alcohols, such as methanol, ethanol, propanol, butanol, and cyclohexanol; ketones, such as cyclohexanone and isophorone; dimethyl sulfoxide, N,N-dimethylformamide, N,N-dimethylcapramide, y-butyrolactone, and the like.

Suitable anti-foaming agents are any substances that can be generally used in agrochemical formulations for this purpose, for example, fatty acid alkyl ester alkoxylates; organopolysiloxanes, such as polydimethylsiloxane and mixtures thereof with fine, optionally silanized silicon dioxide; and perfluoroalkylphosphonates and phosphinates.

Suitable emulsifiers are known in the art and include alcohol alkoxylates, alkylphenol ethoxylates, alkylpolysaccharides, amine ethoxylates, castor oil ethoxylate, sorbide fatty acid ester ethoxylates, polyoxyethylene fatty acids, alkyl benzenesulfonic acid amines, ammonium dodecyl benzenesulfonate, calcium alkylsulfonates, and calcium alkyl benzenesulfonates.

Suitable dispersing agents are also known in the art and include nonionic, amphoteric, cationic and anionic (polymers) surfactants. Preferred dispersing agents are fatty alcohol ethoxylates, fatty alcohol alkoxylates, EO/PO block copolymers, alkylarylsulfonic acids, alkylsulfonic acids, sulfonic acids of ethoxylated alcohols, sulfosuccinates, fatty acid methyl taurates, tristyryl phenol ethoxylates and alkoxylates, tri-sec-butyl phenol ethoxylate, a sulfated cresol-formaldehyde condensate, sulfated condensates of naphthalene and alkyl naphthalenes, lignosulfonates, phosphates of ethoxylated fatty alcohols, tristyrylphenol and tri-sec-butylphenol, copolymers of ethoxylated fatty alcohols, polyacrylic acid, polymethacrylic acid and acrylates, ether sulfates of tristyrylphenol and tri-sec-butylphenol and polymeric dispersants.

Suitable preservatives are known in the art and include organic acids and esters thereof, such as ascorbic acid, ascorbyl palmitate, sorbates, benzoic acid, methyl and propyl 4-hydroxybenzoates, propionates, phenols such as 2-phenylphenolate, 1,2-isothiazolin-3-one, and formaldehyde.

Suitable pH regulators are also known in the art and include acetic acid, citric acid, phosphoric acid, potassium dihydrogen phosphate and sodium bicarbonate.

Suitable antioxidants are known in the art and include BHT (2,6-di-tert-butyl-4-methylphenol).

Suitable colorants are also known in the art and include titanium dioxide, carbon black, zinc oxide and blue pigments.

The liquid composition of the present invention may be any suitable formulation type. The liquid composition is most preferably an emulsifiable concentrate (EC) formulation.

In the present invention, the triazole may be employed with one or more other plant protection active ingredients, such as one or more other fungicides, one or more insecticides or herbicides, or one or more plant growth regulators, that are compatible for use with the triazole fungicide and N-alkylpyrrolidone. For example, the liquid composition according to the present invention may further comprise one or more of the aforementioned agriculturally acceptable active ingredients.

Suitable fungicides that may be used in addition to the triazole include a wide range of commercially available fungicide active compounds, such as the strobilurin fungicides, for example pyraclostrobin, picoxystrobin, azoxystrobin, aromatic fungicides, for example chlorothalonil, amide fungicides, for example boscalid, fluxapyroxad, metalaxyl and prochloraz, benzimidazole fungicides, for example carbendazim, morpholine fungicides, for example fenpropiomorph and dimethomorph, and other fungicides, for example fenpropidin.

Suitable insecticides include a wide range of commercially available insecticide active compounds, such as alanycarb, aldicarb, aminocarb, bendiocarb, benfuracarb, bufencarb, butocarboxim, fenobucarb, formetanate, isoprocarb, methiocarb, methomyl, metolcarb, oxamyl, pirimicarb, promecarb, thiodicarb, profenofos, propaphos, prothiofos, pyridaphenthion, pyridathion, sebufos, sulprofos, tebupirimfos, temephos, terbufos, tetrachlorvinphos, thiometon, triazophos, vamidothion, dimethoate, ethoprophos, etrimfos, fenitrothion, fosthiazate, isoxathion, malathion, mecarbam, beta-cyfluthrin, bifenthrin, ciscypermethrin, clocythrin, cyfluthrin, cyhalothrin, cyphenothrin, deltamethrin, fenpropathrin, fenpyrithrin, fenvalerate, flumethrin, lambda-cyhalothrin, tefluthrin, acetamiprid, clothianidin, dinotefuran, imidacloprid, nitenpyram, nithiazine, thiacloprid, thiamethoxam, acetoprole, ethiprole, fipronil, abamectin, avermectin, emamectin, ivermectin, milbemectin, milbemycin, chromafenozide, halofenozide, methoxyfenozide, tebufenozide, diflubenzuron, flufenoxuron, hexaflumuron, lufenuron, teflubenzuron, bifenazate and buprofezin.

Suitable herbicides include a wide range of commercially available herbicide active compounds, such as dicamba, picloram, 2,4-D, fluoroxypyr, 2-methyl-4-chlorophenoxyacetic acid (MCPA), triclopyr, diclofop-methyl, fenoxaprop-ethyl, fluazifop-butyl, quizalofop-ethyl, chloridazon, norflurazon, chlorpropham, phenmedipham, propham, alachlor, acetochlor, butachlor, metazachlor, metolachlor, pretilachlor, pendimethalin, trifluralin, fluoroglycofen, fomesafen, oxyfluorfen, diuron, isoproturon, linuron, clethodim, cycloxydim, sethoxydim, imazethapyr, imazamethabenz, imazapyr, imazaquin, amidosulfuron, bensulfuron-methyl, chlorimuron-ethyl, chlorsulfuron, cinosulfuron, metsulfuron-methyl, nicosulfuron, primisulfuron, pyrazosulfuron-ethyl, thifensulfuron-methyl, triasulfuron, tribenuron-methyl, metamitron, metribuzin, bentazone, cinmethylin, clomazone, clopyralid, dithiopyr, glufosinate, glyphosate, isoxaben, pyridate, quinchlorac, sulphosate and tridiphane.

Suitable plant growth regulators that may be used include thidiazuron, cyclanilide, ethephon, benzyladenine, gibberellic acid, mefenpyr, isoxadifen and cloquintocct-mexyl.

The amount of each component in the liquid pesticide formulation according to the present invention may vary within a wide range. The liquid pesticide formulation may be prepared by techniques well known to a person skilled in the art.

In the use of the present invention, the liquid composition described hereinbefore is generally diluted with water and the resulting aqueous dispersion is applied to the plants or locus to be treated by spraying. The specific application amount of the liquid pesticide formulation or aqueous spray liquid required for controlling or preventing fungicidal infestation of the target plants may vary depending on the plant to be treated and its locus. In general, suitable application dosages are field application dosages customarily employed by skilled workers in the art.

The amount of the triazole in the aqueous spray liquid after dilution of the liquid composition with water may be from about 0.001% to about 2%, preferably from about 0.01 % to about 1 % by weight of the aqueous spray liquid.

The amount of the N-alkylpyrrolidone in the aqueous spray liquid after dilution of the liquid composition with water may be from about 0.0005% to about 6%, preferably from about 0.005% to about 3% by weight of the aqueous spray liquid.

The N-alkylpyrrolidone effectively reduces or inhibits the crystallization of the triazole in the aqueous spray liquid and/or the liquid pesticide formulation.

In a further aspect, the present invention provides a method for preventing the crystallization of a fungicidally active triazole from an aqueous spray liquid during application, the method comprising providing in the aqueous spray liquid a sufficient amount of at least one N-alkylpyrrolidone to reduce or prevent the crystallization of the triazole from the aqueous spray liquid.

Still further, the present invention provides a method for controlling fungicidal infestation of plants comprising applying to the plants, plant parts or their locus a liquid pesticide formulation as hereinbefore described.

As described above, the liquid formulation is diluted with water to form an aqueous spray liquid prior to application. This method is particularly suitable for use in applications requiring applying the liquid pesticide formulation and/or an aqueous spray liquid containing triazole to the infected plant by spraying.

As noted above, the use of the N-alkylpyrrolidone in combination with the triazole fungicide significantly reduces or prevents the blockage of spray equipment being used to apply the triazole formulation to the target plants or locus.

Accordingly, in a further aspect, the present invention provides the use of an N-alkypyrrolidone to reduce the blockage of spray equipment by a spray formulation comprising a fungicidally active triazole compound.

Still further, the present invention provides a method for preventing the blockage of spray equipment by a spray formulation comprising a fungicidally active triazole compound, the method comprising providing in the formulation an N-alkylpyrrolidone.

A still further aspect of the present invention provides the use of an N-alkypyrrolidone to reduce the residue of a fungicidally active triazole compound in spray equipment by a spray formulation comprising the fungicidally active triazole compound.

Still further, the present invention provides a method for reducing the formation of residue of a fungicidally active triazole compound in spray equipment by a spray formulation comprising a fungicidally active triazole compound, the method comprising providing in the formulation an N-alkylpyrrolidone.

Embodiments of the present invention will now be described, for illustrative purposes only, by way of the following examples.

Unless otherwise indicated, percentages are weight percent of the composition.

### EXAMPLES

The liquid formulations in the following examples were prepared using conventional methods known in the art.

In order to test the effect of a crystallization inhibitor, in each of the examples, 20 L of an aqueous spray liquid was obtained by means of dilution of the liquid composition with water. The amount of the liquid pesticide formulation added in the aqueous spray liquid was about 0.5%. Under the action of a pump, the 20 L of aqueous spray liquid flowed in a circular manner and passed through a fine screen. The pressure of the liquid passing through the fine screen was recorded every hour. Further, liquid that passed through the fine screen was sampled once every hour and the content (ppm) of active ingredients in the aqueous spray liquid was measured using HPLC according to the CIPAC test analysis method.

A significant elevation in liquid pressure indicated that the nozzles and the fine screen were blocked. A blockage is indicated by 'B' in the results provided below.

### Example 1

A liquid composition was prepared from the components and the amounts indicated in Table 1 below.

The liquid composition of Example 1 contained prothioconazole and the N-alkylpyrrolidone in a weight ratio of 1:1.

The comparative Experiment A employed the same liquid composition without a crystallization inhibitor.

Table A below shows the test results.

**Table 1**

| Component | Example 1 Prothioconazole emulsifiable concentrate | Comparative Experiment A Prothioconazole emulsifiable concentrate (no crystallization inhibitor) | Remarks |
|---|---|---|---|
| Prothioconazole | 25% | 25% | Active ingredient |
| Calcium dodecylbenzenesulfonate | 10% | 10% | Emulsifier |
| Sorbitol ethoxylate | 10% | 10% | Emulsifier |
| Cyclohexanone | 30% | 55% | Solvent |
| N-octylpyrrolidone | 25% | - | Crystallization inhibitor |
| Total amount | 100% | 100% | - |

**Table A**

| | Example 1 | | | Comparative Example A | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 42 | 1230 | 0 | 45 | 1210 | 0 |
| 1 | 41 | 1206 | 1.98 | B | / | / |
| 2 | 42 | 1154 | 6.14 | B | / | / |
| 3 | 43 | 1141 | 7.23 | B | / | / |
| 4 | 43 | 1116 | 9.30 | B | / | / |

### Example 2

A liquid composition was prepared from the components and the amounts indicated in Table 2 below.

The liquid composition of Example 2 contained prothioconazole and the N-alkylpyrrolidone in a weight ratio of 1:5.

The comparative Experiment B employed the same liquid composition without a crystallization inhibitor.

Table B shows the test results.

**Table 2**

| Component | Example 2 Prothioconazole emulsifiable concentrate | Comparative Experiment B Prothioconazole emulsifiable concentrate (no crystallization inhibitor) | Remarks |
|---|---|---|---|
| Prothioconazole | 10% | 10% | Active ingredient |
| Calcium dodecylbenzenesulfonate | 10% | 10% | Emulsifier |
| Castor oil ethoxylate | 10% | 10% | Emulsifier |
| y-butyrolactone | 20% | 70% | Solvent |
| N-decylpyrrolidone | 50% | - | Crystallization inhibitor |
| Total amount | 100% | 100% | - |

**Table B**

| | Example 2 | | | Comparative Example B | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 39 | 497 | 0 | 43 | 458 | 0 |
| 1 | 39 | 484 | 2.66 | 45 | 366 | 19.96 |
| 2 | 40 | 476 | 4.29 | 48 | 312 | 31.93 |
| 3 | 40 | 468 | 5.93 | 53 | 272 | 40.55 |
| 4 | 40 | 465 | 6.34 | 58 | 212 | 53.78 |

### Example 3

A liquid composition was prepared from the components and the amounts indicated in Table 3 below.

The liquid composition of Example 3 contained prothioconazole and the N-alkylpyrrolidone in a weight ratio of 10:1.

The comparative Experiment C employed the same liquid composition without a crystallization inhibitor.

Table C shows the test results.

**Table 3**

| Component | Example 3 Prothioconazole emulsifiable concentrate | Comparative Experiment C Prothioconazole emulsifiable concentrate (no crystallization inhibitor) | Remarks |
|---|---|---|---|
| Prothioconazole | 30% | 30% | Active ingredient |
| Calcium dodecylbenzenesulfonate | 5% | 5% | Emulsifier |
| Castor oil ethoxylate | 15% | 15% | Emulsifier |
| Dimethylformamide | 47% | 50% | Solvent |
| N-dodecylpyrrolidone | 3% | - | Crystallization inhibitor |
| Total amount | 100% | 100% | - |

**Table C**

| | Example 3 | | | Comparative Example C | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 1455 | 0 | 41 | 1423 | 0 |
| 1 | 39 | 1342 | 7.77 | B | / | / |
| 2 | 40 | 1320 | 9.28 | B | / | / |
| 3 | 40 | 1280 | 12.03 | B | / | / |
| 4 | 41 | 1232 | 15.33 | B | / | / |

### Example 4

A liquid composition was prepared from the components and the amounts indicated in Table 4 below.

The liquid composition of Example 4 contained prothioconazole and the N-alkylpyrrolidone in a weight ratio of 2:1.

The comparative Experiment D employed the same liquid composition without a crystallization inhibitor.

Table D shows the test results.

**Table 4**

| Component | Example 4 Prothioconazole emulsifiable concentrate | Comparative Experiment D Prothioconazole emulsifiable concentrate (no crystallization inhibitor) | Remarks |
|---|---|---|---|
| Prothioconazole | 20% | 20% | Active ingredient |
| Sorbitol ethoxylate | 7.5% | 7.5% | Emulsifier |
| Castor oil ethoxylate | 7.5% | 7.5% | Emulsifier |
| Xylene | 55% | 65% | Solvent |
| N-cetylpyrrolidone | 5% | - | Crystallization inhibitor |
| N-octylpyrrolidone | 5% | - | Crystallization inhibitor |
| Total amount | 100% | 100% | - |

**Table D**

| | Example 4 | | | Comparative Example D | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 39 | 980 | 0 | 41 | 956 | 0 |
| 1 | 39 | 957 | 2.35 | B | / | / |
| 2 | 40 | 932 | 4.9 | B | / | / |
| 3 | 41 | 910 | 7.14 | B | / | / |
| 4 | 41 | 894 | 8.78 | B | / | / |

### Example 5

A liquid composition was prepared from the components and the amounts indicated in Table 5 below.

The liquid composition of Example 5 contained prothioconazole and the N-alkylpyrrolidone in a weight ratio of 1:2.

The comparative Experiment E employed the same liquid composition without a crystallization inhibitor.

Table E shows the test results.

**Table 5**

| Component | Example 5 Prothioconazole emulsifiable concentrate | Comparative Experiment E Prothioconazole emulsifiable concentrate (no crystallization inhibitor) | Remarks |
|---|---|---|---|
| Prothioconazole | 20% | 20% | Active ingredient |
| Calcium dodecylbenzenesulfonate | 10% | 10% | Emulsifier |
| Castor oil ethoxylate | 5% | 5% | Emulsifier |
| Propylene carbonate | 25% | 65% | Solvent |
| N-eicosylpyrrolidone | 20% | - | Crystallization inhibitor |
| N-octylpyrrolidone | 20% | - | Crystallization inhibitor |
| Total amount | 100% | 100% | - |

**Table E**

| | Example 5 | | | Comparative Example E | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 39 | 993 | 0 | 42 | 945 | 0 |
| 1 | 39 | 978 | 1.51 | B | / | / |
| 2 | 40 | 943 | 5.04 | B | / | / |
| 3 | 40 | 930 | 6.34 | B | / | / |
| 4 | 40 | 908 | 8.56 | B | / | / |

### Example 6

A liquid composition was prepared from the components and the amounts indicated in Table 6 below.

The liquid composition of Example 6 contained prothioconazole and the N-alkylpyrrolidone in a weight ratio of 1:3.

The comparative Experiment F employed the same liquid composition without a crystallization inhibitor.

Table F shows the test results.

**Table 6**

| Component | Example 6 Prothioconazole emulsifiable concentrate | Comparative Experiment F Prothioconazole emulsifiable concentrate (no crystallization inhibitor) | Remarks |
|---|---|---|---|
| Prothioconazole | 5% | 5% | Active ingredient |
| Calcium dodecylbenzenesulfonate | 10% | 10% | Emulsifier |
| Sorbitol ethoxylate | 10% | 10% | Emulsifier |
| Aromatic solvent | 60% | 75% | Solvent |
| N-octylpyrrolidone | 15% | - | Crystallization inhibitor |
| Total amount | 100% | 100% | - |

**Table F**

| | Example 6 | | | Comparative Example F | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 41 | 247 | 0 | 41 | 244 | 0 |
| 1 | 39 | 242 | 2.04 | 43 | 220 | 9.84 |
| 2 | 39 | 239 | 3.27 | 44 | 180 | 26.24 |
| 3 | 40 | 232 | 6.12 | 45 | 150 | 38.52 |
| 4 | 40 | 230 | 6.94 | 47 | 124 | 49.18 |

### Example 7

A liquid composition was prepared from the components and the amounts indicated in Table 7 below.

The liquid composition of Example 7 contained prothioconazole and the N-alkylpyrrolidone in a weight ratio of 8:1.

The comparative Experiment G employed the same liquid composition without a crystallization inhibitor.

Table G shows the test results.

**Table 7**

| Component | Example 7 Prothioconazole emulsifiable concentrate | Comparative Experiment G Prothioconazole emulsifiable concentrate (no crystallization inhibitor) | Remarks |
|---|---|---|---|
| Prothioconazole | 40% | 40% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 25% | 30% | Solvent |
| N-dodecylpyrrolidone | 5% | - | Crystallization inhibitor |
| Total amount | 100% | 100% | - |

**Table G**

| | Example 7 | | | Comparative Example G | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 1985 | 0 | 41 | 1925 | 0 |
| 1 | 39 | 1936 | 2.47 | B | / | / |
| 2 | 41 | 1868 | 5.89 | B | / | / |
| 3 | 42 | 1810 | 8.82 | B | / | / |
| 4 | 42 | 1724 | 13.15 | B | / | / |

### Example 8

A liquid composition was prepared from the components and the amounts indicated in Table 8 below.

The liquid composition of Example 8 contained prothioconazole and the N-alkylpyrrolidone in a weight ratio of 2:1.

The comparative Experiment H employed the same liquid composition without a crystallization inhibitor.

Table H shows the test results.

**Table 8**

| Component | Example 8 Prothioconazole emulsifiable concentrate | Comparative Experiment H Prothioconazole emulsifiable concentrate (no crystallization inhibitor) | Remarks |
|---|---|---|---|
| Prothioconazole | 25% | 25% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 32.5% | 45% | Solvent |
| N-dodecylpyrrolidone | 12.5% | - | Crystallization inhibitor |
| Total amount | 100% | 100% | - |

**Table H**

| | Example 8 | | | Comparative Example H | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 1235 | 0 | 41 | 1225 | 0 |
| 1 | 39 | 1232 | 0.27 | B | / | / |
| 2 | 39 | 1222 | 1.06 | B | / | / |
| 3 | 39 | 1214 | 1.73 | B | / | / |
| 4 | 39 | 1205 | 2.46 | B | / | / |

### Example 9

A liquid composition was prepared from the components and the amounts indicated in Table 9 below.

The liquid composition of Example 9 contained prothioconazole and the N-alkylpyrrolidone in a weight ratio of 2:1.

The comparative Experiment I employed the same liquid composition without a crystallization inhibitor.

Table I shows the test results.

**Table 9**

| Component | Example 9 Prothioconazole emulsifiable concentrate | Comparative Experiment I Prothioconazole emulsifiable concentrate (no crystallization inhibitor) | Remarks |
|---|---|---|---|
| Prothioconazole | 12.5% | 12.5% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 45% | 57.5% | Solvent |
| N-dodecylpyrrolidone | 12.5% | - | Crystallization inhibitor |
| Total amount | 100% | 100% | - |

**Table I**

| | Example 9 | | | Comparative Example I | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 611 | 0 | 41 | 604 | 0 |
| 1 | 40 | 602 | 1.55 | B | / | / |
| 2 | 40 | 589 | 3.58 | B | / | / |
| 3 | 41 | 564 | 7.63 | B | / | / |
| 4 | 41 | 546 | 10.64 | B | / | / |

### Example 10

A liquid composition was prepared from the components and the amounts indicated in Table 10 below.

The liquid composition of Example 10 contained prothioconazole and the N-alkylpyrrolidone in a weight ratio of 2:1.

The comparative Experiment J employed the same liquid composition without a crystallization inhibitor.

Table J shows the test results.

**Table 10**

| Component | Example 10 Prothioconazole emulsifiable concentrate | Comparative Experiment J Prothioconazole emulsifiable concentrate (no crystallization inhibitor) | Remarks |
|---|---|---|---|
| Prothioconazole | 25% | 25% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 32.5% | 45% | Solvent |
| N-octylpyrrolidone | 12.5% | - | Crystallization inhibitor |
| Total amount | 100% | 100% | - |

**Table J**

| | Example 10 | | | Comparative Example J | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 1242 | 0 | 41 | 1214 | 0 |
| 1 | 40 | 1242 | 0 | B | / | / |
| 2 | 40 | 1237 | 0.4 | B | / | / |
| 3 | 40 | 1232 | 0.81 | B | / | / |
| 4 | 41 | 1227 | 1.21 | B | / | / |

### Example 11

A liquid composition was prepared from the components and the amounts indicated in Table 11 below.

The liquid composition of Example 11 contained prothioconazole and the N-alkylpyrrolidone in a weight ratio of 1.5:1.

The comparative Experiment K employed the same liquid composition without a crystallization inhibitor.

Table K shows the test results.

**Table 11**

| Component | Example 11 Prothioconazole emulsifiable concentrate | Comparative Experiment K Prothioconazole emulsifiable concentrate (no crystallization inhibitor) | Remarks |
|---|---|---|---|
| Prothioconazole | 24% | 24% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 30% | 46% | Solvent |
| N-octylpyrrolidone | 16% | - | Crystallization inhibitor |
| Total amount | 100% | 100% | - |

**Table K**

| | Example 11 | | | Comparative Example K | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 40 | 1210 | 0 | 41 | 1214 | 0 |
| 1 | 41 | 1210 | 0 | B | / | / |
| 2 | 41 | 1206 | 0.37 | B | / | / |
| 3 | 41 | 1195 | 1.22 | B | / | / |
| 4 | 41 | 1178 | 2.64 | B | / | / |

### Example 12

A liquid composition was prepared from the components and the amounts indicated in Table 12 below.

The liquid composition of Example 12 contained cyproconazole and the N-alkylpyrrolidone in a weight ratio of 2:1.

The comparative Experiment L employed the same liquid composition without a crystallization inhibitor.

Table L shows the test results.

**Table 12**

| Component | Example 12 Cyproconazole emulsifiable concentrate | Comparative Experiment L Cyproconazole emulsifiable concentrate (no crystallization inhibitor) | Remarks |
|---|---|---|---|
| Cyproconazole | 25% | 25% | Active ingredient |
| Calcium dodecylbenzenesulfonate | 15% | 15% | Emulsifier |
| Sorbitol ethoxylate | 15% | 15% | Emulsifier |
| N,N-Dimethylformamide | 32.5% | 45% | Solvent |
| N-octylpyrrolidone | 12.5% | - | Crystallization inhibitor |
| Total amount | 100% | 100% | - |

**Table L**

| | Example 12 | | | Comparative Example L | | |
|---|---|---|---|---|---|---|
| Time (hours) | Liquid Pressure (Bar) | Triazole Concentration (ppm) | Reduction in Triazole content (%) | Liquid Pressure (Bar) | Triazole Concentration (ppm) | Reduction in Triazole content (%) |
| 0 | 41 | 1230 | 0 | 41 | 1214 | 0 |
| 1 | 41 | 1222 | 0.65 | B | / | / |
| 2 | 42 | 1212 | 1.47 | B | / | / |
| 3 | 43 | 1199 | 2.55 | B | / | / |
| 4 | 42 | 1180 | 4.06 | B | / | / |

As can be seen from the above examples, the use of an N-alkylpyrrolidone in the aqueous spray liquids comprising a fungicidally active triazole, in particular either prothioconazole or cyproconazole, exhibited an excellent performance of inhibiting the crystallization of the triazole. The clogging of nozzles of the spray equipment due to the crystallization of prothioconazole or cyproconazole is effectively prevented.

## Claims

1. Use of an N-alkylpyrrolidone to inhibit the crystallization of a fungicidally active triazole in a liquid formulation.

2. The use according to claim 1, wherein an N-alkylpyrrolidone of the general formula (l) is employed: 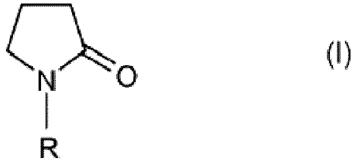 wherein R is an alkyl group, preferably wherein R is a linear alkyl group.

3. The use according to claim 2, wherein R is an alkyl group having from at least 5 carbon atoms, more preferably at least 6 carbon atoms, still more preferably at least 7 carbon atoms, more preferably still at least 8 carbon atoms; and/or wherein R is an alkyl group having up to 20 carbon atoms, more preferably up to 18 carbon atoms, still more preferably up to 16 carbon atoms, more preferably still up to 14 carbon atoms, still more preferably up to 12 carbon atoms; and/or wherein R is an alkyl group having from 5 to 20 carbon atoms, more preferably from 6 to 18 carbon atoms, still more preferably from 7 to 16 carbon atoms, more preferably still from 8 to 14 carbon atoms, more preferably from 8 to 12 carbon atoms.

4. The use according to any preceding claim, wherein the N-alkylpyrrolidone is selected from N-hexyl-pyrrolidone, N-octyl-pyrrolidone, N-decyl-pyrrolidone, N-dodecyl-pyrrolidone, N-tetradecyl-pyrrolidone, N-cetyl-pyrrolidone, N-octadecyl-pyrrolidone, N-eicosyl-pyrrolidone, or mixtures thereof, preferably N-octyl-pyrrolidone.

5. The use according to any preceding claim, wherein the triazole is selected form azaconazole, bromuconazole, cyproconazole, diclobutrazol, difenoconazole, diniconazole, diniconazole-M, epoxiconazole, etaconazole, enbuconazole, fluquinconazole, flusilazole, flutriafol, furconazole, furconazole-cis, hexaconazole, imibenconazole, ipconazole, ipfentrifluconazole, mefentrifluconazole, metconazole, myclobutanil, penconazole, propiconazole, prothioconazole, quinconazole, simeconazole, tebuconazole, tetraconazole, triadimefon, triadimenol, triticonazole, uniconazole, uniconazole-P and mixtures thereof; preferably wherein the triazole is prothioconazole, cyproconazole, or a mixture thereof.

6. The use according to any preceding claim, wherein the weight ratio of the triazole to the N-alkylpyrrolidone is from 15:1 to 1:15, preferably from 12:1 to 1:10, more preferably from 10:1 to 1:5, still more preferably from 5:1 to 1:3, more preferably still from 3:1 to 1:2, still more preferably from 1.5:1 to 1:1, especially about 1:1.

7. A liquid fungicidal composition, the composition comprising:
(1) at least one fungicidally active triazole;
(2) at least one N-alkylpyrrolidone; and
(3) optionally one or more agriculturally acceptable formulation additive.

8. The composition according to claim 7, wherein the triazole is present in an amount of from 0.5% by weight, preferably from 1% by weight, more preferably from 2%, still more preferably from 3%, more preferably still from 5% by weight; and/or wherein the triazole is present in an amount of up to 60% by weight, preferably up to 50% by weight, more preferably up to 40% by weight, still more preferably up to 30% by weight; and/or wherein the triazole is present in the composition in an amount of from 0.5 to 60% by weight, preferably from 1 to 50%, more preferably from 2 to 40% by weight.

9. The composition according to either of claims 7 or 8, wherein the N-alkylpyrrolidone is present in an amount of from 0.5% by weight, preferably from 1% by weight, more preferably from 2%, still more preferably from 3%, more preferably still from 5% by weight; and/or the N-alkylpyrrolidone is present in an amount of up to 90% by weight, preferably up to 80% by weight, more preferably up to 70% by weight, still more preferably up to 60% by weight; and/or the N-alkylpyrrolidone is present in the composition in an amount of from 0.5 to 90% by weight, preferably from 1 to 80%, more preferably from 2 to 70% by weight.

10. The composition according to any of claims 7 to 9, wherein the composition comprises:
(1) about 1 to 40% by weight, preferably about 5 to 30%, of at least one triazole active ingredient;
(2) about 1 to 90% by weight, preferably about 5 to 70%, of at least one N-alkylpyrrolidone as a crystallization inhibitor having the formula (I): 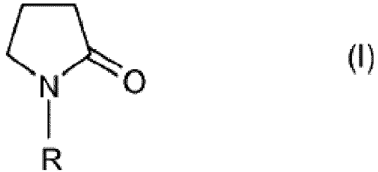 wherein R is an alkyl group, preferably a linear saturated alkyl group having 6 to 20 carbon atoms, more preferably a linear saturated alkyl group having 8 to 16 carbon atoms; and
(3) about 0 to 98% by weight of one or more agrochemical additives.

11. A method for preventing the crystallization of a fungicidally active triazole from an aqueous spray liquid during application, the method comprising providing in the aqueous spray liquid a sufficient amount of at least one N-alkylpyrrolidone to reduce or prevent the crystallization of the triazole from the aqueous spray liquid.

12. A method for controlling fungicidal infestation of plants comprising applying to the plants, plant parts or their locus a liquid pesticide formulation as claimed in any of claims 7 to 10.

13. Use of an N-alkypyrrolidone to reduce the blockage of spray equipment by a spray formulation comprising a fungicidally active triazole compound.

14. A method for preventing the blockage of spray equipment by a spray formulation comprising a fungicidally active triazole compound, the method comprising providing in the formulation an N-alkylpyrrolidone.

15. Use of an N-alkypyrrolidone to reduce the residue of a fungicidally active triazole compound in spray equipment by a spray formulation comprising the fungicidally active triazole compound.

16. A method for reducing the formation of residue of a fungicidally active triazole compound in spray equipment by a spray formulation comprising a fungicidally active triazole compound, the method comprising providing in the formulation an N-alkylpyrrolidone.
